# EUROPÄISCHE PATENTSCHRIFT

(11) **EP 2 876 784 B1**
(45) Veröffentlichungstag und Bekanntmachung des Hinweises auf die Patenterteilung: **30.08.2017**
(21) Anmeldenummer: 13194468.8
(22) Anmeldetag: 26.11.2013
(51) Int. Cl.: H02K 1/24

(54) **Reluktanzmaschine**
Reluctance machine
Machine à reluctance

(43) Veröffentlichungstag der Anmeldung: 27.05.2015
(73) Patentinhaber: Siemens Aktiengesellschaft, 80333 München (DE)
(72) Erfinder: Vollmer, Rolf, 36129 Gersfeld (DE)

(56) Entgegenhaltungen:
- EP-A1- 1 978 619
- DE-A1- 1 814 383
- DE-A1- 19 845 044
- DE-A1- 19 920 309
- GB-A- 1 114 562
- YONG KWON CHOI ET AL: "Pole-Shape Optimization of a Switched-Reluctance Motor for Torque Ripple Reduction", IEEE TRANSACTIONS ON MAGNETICS, IEEE SERVICE CENTER, NEW YORK, NY, US, Bd. 43, Nr. 4, 1. April 2007 (2007-04-01), Seiten 1797-1800, XP011175554, ISSN: 0018-9464, DOI: 10.1109/TMAG.2006.892292

## Beschreibung

Die Erfindung betrifft das Gebiet der elektrischen Maschinen, insbesondere betrifft die Erfindung eine Reluktanzmaschine mit einem Stator und einem Rotor.

Insgesamt haben Reluktanzmaschinen Pendeldrehmomente mit unterschiedlichen Frequenzen bzw. Wellenlängen. Wenn das Drehmoment und dessen Fourieranalyse über eine Umdrehung betrachtet wird, so ist eine Pendelung mit der Nutfrequenz ausgeprägt zu erkennen. Dies bedeutet, dass das Drehmoment mit der Nutzahl N1 des Ständers schwankt. Weitere Pendelungen oder Drehmomentschwankungen erfolgen mit den Vielfachen der Nutung. Dabei ist die 3*N1-Pendelung eine weitere ausgeprägte Drehmomentschwankung. Eine weitere Welligkeit des Drehmoments ist durch die 6-fache Polpaarfrequenz gegeben. Hierbei hängt die Drehmomentwelligkeit von der Anzahl der Polpaare der Reluktanzmaschine ab und ist umso höher, je geringer die Anzahl der Polpaare ist. Bei Reluktanzmaschinen, die mit Drehstrom gespeist werden, ergibt sich die Drehmomentwelligkeit aus dem sechsfachen der Anzahl der Polpaare.

Die systembedingte Drehmomentwelligkeit bei Reluktanzmaschinen scheint bisher hingenommen worden zu sein. Bei Reluktanzmaschinen wurde bisher eine Schrägung am Stator oder Rotor vorgenommen, die um eine Ständernutteilung geschrägt sind. Diese Maßnahmen sind aber nicht ausreichend und erzeugen zusätzliche Kosten.

GB 1 114 562 A beschreibt einen Rotor einer elektrischen Maschine, der Blechpakete aufweist, die mit ihren Enden an der Oberfläche des Rotors liegen.

DE 18 14 383 A1 beschreibt eine dynamoelektrische Maschine mit Reluktanzwirkung, bei der der magnetische Widerstand in Richtung ihrer Querachse vergrößert werden soll. Hierbei wird zwischen den einzelnen Blechen der Blechpakete dünne Schichten aus unmagnetischem Werkstoff angeordnet. Hierbei können die Blechpakete so gebogen sein, dass sie jeweils einen Kraftflussweg zwischen benachbarten Polen bilden.

DE 199 20 309 A1 beschreibt einen Motor mit verringerter Dehmomentwelligkeit, der als Reluktanz-Synchronmotor ausgebildet sein kann. Hierbei wird vorgeschlagen Magnetpolmitten des Rotors zu versetzen.

Das Dokument von Yong Kwon Choi "Pole-Shape Optimization of a Switched-Reluctance Motor for Torque Ripple Reduction"; IEEE Transactions on Magnetics, IEEE Service Center, New York, NY, US, Bd. 43, Nr. 4, 1. April 2007, Seiten 1797-1800, ISSN 0018-9464 beschreibt einen Reluktanzmotor mit Polschuhen. Es wird durch eine Kontur des Stators und die vorhandenen Polschuhe des Rotors ein sich in seiner Breite verändernder Luftspalt ausgebildet. Hierbei wird in Radialrichtung der Luftspalt in Bereichen geringer, in denen der Rotorpol den Statorpol überdeckt.

DE 198 45 044 A1 beschreibt einen Reluktanzmotor zur Reduzierung von Drehmomentwelligkeit. Die Breite oder ein Verspreizungswinkel der Rotorpole ist derart ausgelegt, dass diese Breite bzw. der Verspreizungswinkel größer als die Breite oder der Verspreizungswinkel der Statorpole ist.

EP 1 978 619 A1 beschreibt eine Rotationsmaschine mit einer Ständerkontur, deren Zähne unterschiedlich lang in Radialrichtung ausgebildet sind, so dass ein Luftspalt entsteht, der in seiner Breite variiert.

Es ist Aufgabe der Erfindung das Auftreten der Drehmomentwelligkeit bei einer Reluktanzmaschine zu reduzieren.

Diese Aufgabe wird mit einer Reluktanzmaschine gemäß den Merkmalen des Patentanspruchs 1 gelöst.

Unter dem Begriff "Reluktanzmaschine" ist ein Reluktanzmotor wie auch ein Reluktanzgenerator zu verstehen. Hierbei wird ein Drehmoment im Rotor ausschließlich durch eine Reluk-tan¬kraft erzeugt, d.h. eine Kraft aufgrund eines magnetischen Widerstandes. Das System aus Stator und Rotor strebt einen minimalen magnetischen Widerstand an, so dass eine Rotationsbewegung des Rotors der Reluktanzmaschine erzeugt wird.

Die vorgeschlagene Maschine kann als Synchron-Reluktanzmaschine ausgeführt werden. Ferner kann die vorgeschlagene Maschine als Asynchron-Reluktanzmaschine ausgeführt sein.

In einer bevorzugten Ausführungsform weist jedes Wirkelement zwei Wirkflächen auf. Ein Wirkelement kann beispielsweise in dem Rotor so integriert sein, indem es eine gebogene Form aufweist und die gebogene Form zwei Wirkflächen am Umfang des Rotors bereitstellt. Die gebogene Form kann beispielsweise eine Form eines Kreissegments sein oder Teil eines zylinderförmigen Elements sein, das verformt ist. An den Enden des Elements können die Wirkflächen zur Verfügung gestellt werden. Auf diese Weise können mit Einbettung eines Wirkelements mehrere Wirkflächen zur Verfügung gestellt werden.

In einem bevorzugten Ausführungsbeispiel kann vorgesehen werden, dass der Rotor acht Wirkflächen aufweist. Diese acht Wirkflächen können jeweils eine Oberfläche aufweisen, die ein Teilsegment des Rotors sind. Ferner können die acht Wirkflächen durch vier Wirkelemente bereitgestellt werden.

Ferner kann vorgesehen werden, dass die Wirkelemente achsensymmetrisch ausgebildet sind. Dies bedeutet, dass jedes Wirkelement zu einer gedachten Achse, die durch das Wirkelement verläuft symmetrisch ist. In einer zweidimensionalen Betrachtung mit Schnitt durch den Rotor kann das Wirkelement symmetrisch zu einer Achse sein, die durch den Mittelpunkt des Rotors verläuft.

In einer bevorzugten Ausführungsform kann vorgesehen werden, dass die Wirkelemente aus geblechtem Elektroblech hergestellt sind. Es handelt sich hierbei um ein weichmagnetisches Wirkelement.

Mit Vorteil kann vorgesehen werden, dass zwei Wirkelemente am Umfang des Rotors um 180° versetzt zueinander angeordnet sind. Auf diese Weise wird eine Vergleichmäßigung der Wirkung der Wirkelemente hervorgerufen. Mit Vorteil liegen sich die beiden Wirkelemente somit am Umfang des Rotors gegenüber.

In einer bevorzugten Ausführungsform kann vorgesehen werden, dass mindestens eine der Wirkflächen einen ersten Winkel α=(n+1/2)*α_n1 aufweist, wobei der erste Winkel α von zwei Geraden begrenzt wird, die ausgehend von dem Rotormittelpunkt durch Begrenzungen der Wirkfläche in einer zweidimensionalen Schnittansicht des Rotors führen. Hierbei ist n eine ganze Zahl oder Null, d.h. n= 0, 1, 2, 3, etc. Ferner ist der Winkel α_n1=360°/N1 und N1 als Anzahl der Nuten des Stators oder Ständernutzahl.

Mit dieser Wahl des Winkels α ist es weiterhin möglich, Drehmomentschwankungen mit Nutfrequenz der Reluktanzmaschine zu reduzieren.

In einem weiteren Ausführungsbeispiel kann vorgesehen werden, dass jeweils zwei um 180° versetzte Wirkelemente ein Paar bilden und ein erstes Paar von Wirkelementen eine erste Symmetrieachse aufweist und ein zweites Paar von Wirkelementen eine zweite Symmetrieachse aufweist, wobei sich die Lage der zweiten Symmetrieachse aus der ersten Symmetrieachse ergibt, indem die zweite Symmetrieachse um einen Winkel β=90°-α_3n1 gegenüber der ersten Symmetrieachse gedreht ist und für den Winkel α_3n1 gilt α_3n1=1/3*α_n1.

Die beiden Symmetrieachsen beziehen sich jeweils auf ein Paar von Winkelelementen und bilden für dieses Paar die Symmetrieachse, wobei jedes der Winkelelemente eine achsensymmetrische Form aufweist. Hierbei verläuft jede Symmetrieachse durch den Mittelpunkt der Reluktanzmaschine.

Die Anwendung des zweiten Winkels α_3n1, beispielsweise auch zusätzlich angewendet zu dem ersten Winkel α, reduziert die Drehmomentenwelligkeit mit der dreifachen Nutfrequenz.

In einer bevorzugten Ausführungsform ist die Reluktanzmaschine eine Synchronreluktanz-Maschine die vier Pole und 48 Nuten aufweist. Eine solche Maschine kann sowohl als Motor oder als Generator ausgeführt sein.

Im Folgenden wird die Erfindung anhand eines Ausführungsbeispiels näher beschrieben.

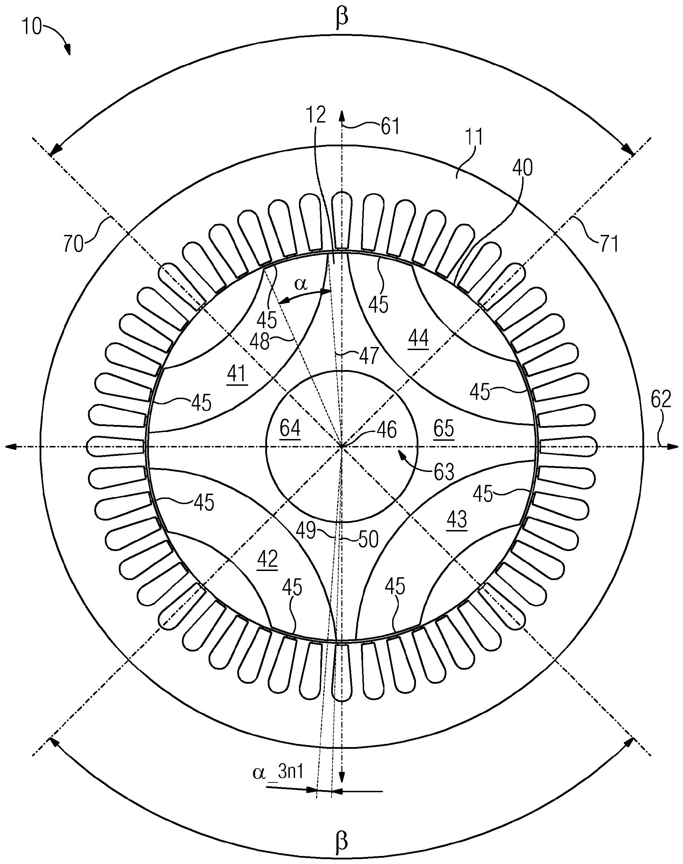

Hierbei zeigt die einzige Figur einen Querschnitt durch eine Reluktanzmaschine mit einem Stator und einem Rotor, wobei der Rotor weichmagnetische Wirkelemente aufweist. Hierbei handelt es sich um eine schematische Darstellung, die nicht maßstabsecht ist.

Die Figur zeigt eine Reluktanzmaschine 10 mit einem Stator 11 und einem Rotor 12. Die Reluktanzmaschine 10 weist in zweidimensionaler Schnittansicht zwei Hauptachsen 61, 62 auf, wobei die Achse 61 die d-Achse der Reluktanzmaschine 10 ist. Ferner weist die Reluktanzmaschine 10 innerhalb des Rotors 12 amagnetische oder nichtmagnetische Bereiche 63 auf. Der Rotor 12 weist an seinem Umfang 40 vier Wirkelemente 41, 42, 43, 44 auf, die aus geblechtem Elektroblech hergestellt sind und weichmagnetisch sind. Die vier weichmagnetischen Wirkelemente 41, 42, 43, 44 bilden jeweils Segmente des Rotors 12 und weisen dem Stator 11 zugewandte Flächen 45 auf, die einen Ausschnitt einer Zylinderoberfläche entsprechen. Dieser Ausschnitt oder die Fläche 45 ist jeweils durch einen ersten Winkel α=(n+1/2)*α_n1 begrenzt, wobei α_n1=360°/N1 ist. Hierbei ist N1 die Ständernutzahl und n eine natürliche Zahl oder Null. Der Winkel α wird hierbei in Bezug auf den Mittelpunkt 46 des Rotors 12 gemessen, indem jeweils eine Gerade 47, 48 durch einen der Randpunkte der Fläche 45 führt. Die beiden Geraden 47, 48 gehen von dem Mittelpunkt 46 aus und schließen den Winkel α ein.

Die beiden Wirkelemente 41, 43 liegen sich gegenüber und sind gegeneinander um 180° versetzt. Ferner liegen sich die beiden Wirkelemente 42, 44 ebenfalls gegenüber und sind gegeneinander um 180° versetzt. Die beiden Wirkelemente 41, 43 bilden ein erstes Paar von Wirkelementen und die beiden Wirkelemente 42, 44 bilden ein zweites Paar von Wirkelementen. Hierbei sind die beiden Wirkelemente 41, 43 gegenüber den beiden Wirkelementen 42, 44 um einen zweiten Winkel α_3n1 versetzt angeordnet. Hierbei kann vorgesehen werden, dass α_3n1=1/3*α_n1 ist. Der Winkel α_3n1 wird von zwei Geraden 49, 50 begrenzt, wobei die beiden Geraden 49, 50 durch den Mittelpunkt 46 des Rotors 12 führen.

Mit anderen Worten sind die Flächen 45 jeweils eine Wirkfläche mit jeweils dem Bedeckungswinkel α. Die um 180° gegenüberliegenden Wirkelemente 41, 43 sind zu den ebenfalls um 180° gegenüberliegenden Wirkelementen 42, 44 um den Winkel α_3n1 rotatorisch versetzt. Dies bedeutet, dass jeweils zwei um 180° versetzte Wirkelemente zu einem Paar zusammengefasst werden. Ein Paar von Wirkelementen 42, 44 hat eine erste Symmetrieachse 70. Ein zweites Paar von Wirkelementen 41, 43 hat eine zweite Symmetrieachse 71. Die zweite Symmetrieachse 71 ergibt sich aus der ersten Symmetrieachse 70, indem diese um den Winkel β=90°-α_3n1 gegenüber der ersten Symmetrieachse 70 gedreht wird. Für den Winkel α_3n1 gilt: α_3n1=1/3*α_n1.

Die dargestellte Reluktanzmaschine 10 weist insgesamt vier Wirkelemente 41-44 auf. Somit kann vorgesehen werden, dass zwei sich am Umfang des Rotors 12 gegenüberliegende Wirkelemente 41, 43 und 42, 44 jeweils um 180° versetzt sind und benachbarte Wirkelemente am Umfang des Rotors 12 jeweils um 90° plus α_3n1 versetzt sind. Dies bedeutet, dass sich gegenüberliegende Wirkelemente 41, 43 oder 42,44 eine Gruppe bilden und zwei Gruppen um den zweiten Winkel α_3n1 rotatorisch versetzt zueinander angeordnet sind.

Die vorgeschlagene Maschine weist in der Mitte der Hauptachse 61 (d-Achse) amagnetisches Material (µr<1.5) auf. Hierbei kann der Rotorstern 64 und/oder die Welle 65 aus amagnetischem Material ausgebildet sein.

Insgesamt wird die Drehmomentwelligkeit reduziert, insbesondere mit der dreifachen Nutfrequenz verringert oder eliminiert. Eine erste Maßnahme hierbei ist die Wahl des Winkels α, der die Nutfrequenz reduziert. Eine weitere Maßnahme ist die Wahl des Winkels α_3n1, der die Drehmomentenwelligkeit mit der 3-fachen Nutfrequenz reduziert. Weitere Maßnahmen zur Senkung der Drehmomentwelligkeit können beispielsweise anhand einer unrunden Ständerbohrung angewandt werden. Hierbei kann vorgesehen werden, dass die Rotorkontur als zweidimensionale Kontur einem Kreis entspricht, während die Statorkontur als zweidimensionale Kontur von einem Kreis abweicht.

Mit der erfindungsgemäßen Reluktanzmaschine wird eine deutliche Senkung der Drehmomentwelligkeit erreicht, so dass es möglich wird, Reluktanzmaschinen dort einzusetzen, wo sie bisher wegen zu hoher Drehmomentwelligkeit nicht zum Einsatz kamen. Er eröffnen sich somit weitere Einsatzgebiete für Reluktanzmaschinen. Beispielsweise kann die erfindungsgemäße Reluktanzmaschine als Motor und/oder Generator in einem Elektrofahrzeug verwendet werden, insbesondere in einem Hybridelektrofahrzeug. Neben dem Gebiet der Antriebe von Elektrofahrzeugen und Elektrohybridfahrzeuge sind weitere Anwendungen denkbar, wie z.B. Anwendungen für Aufzugsantriebe, für Motoren in der Produktionstechnik und für Werkzeugmaschinen.

## Patentansprüche

1. Reluktanzmaschine (10) aufweisend
- einen Stator (11);
- einen Rotor (12);
- wobei der Rotor (12) eine Vielzahl von Wirkelementen (41-44) mit jeweils mindestens einer Wirkfläche (45) mit einem Bedeckungswinkel α aufweist, wobei der Bedeckungswinkel α in Bezug auf den Mittelpunkt (46) des Rotors (12) gemessen wird, indem in einer zweidimensionalen Schnittansicht des Rotors jeweils eine Gerade (47, 48) durch einen der Randpunkte der Wirkfläche (45) führt, wobei die beiden Geraden (47, 48) von dem Mittelpunkt (46) ausgehen und den Bedeckungswinkel α einschließen, wobei die Wirkflächen (45) jeweils ein Segment des Rotors (12) bilden und dem Stator (11) zugewandt sind, und wobei die Wirkflächen (45) eine Reduzierung von Drehmomentschwankungen der Reluktanzmaschine (10) bewirken,
- indem jeweils zwei um 180° versetzte Wirkelemente ein Paar (41, 43; 42, 44) bilden und ein erstes Paar von Wirkelementen (41, 43) eine erste Symmetrieachse (70) aufweist und ein zweites Paar von Wirkelementen (42, 44) eine zweite Symmetrieachse (71) aufweist, wobei sich die Lage der zweiten Symmetrieachse (71) aus der ersten Symmetrieachse (70) ergibt, indem die zweite Symmetrieachse (71) um einen Winkel β=90'-α_3n1 gegenüber der ersten Symmetrieachse (70) gedreht ist und wobei für den Winkel α_3n1 gilt α_3n1=1/3*α_n1, mit α_n1=360°/N1 und N1 = Anzahl der Nuten des Stators (11), und
wobei jede Symmetrieachse (70, 71) durch den Mittelpunkt (46) der Reluktanzmaschine (10) verläuft.

2. Reluktanzmaschine (10) nach Anspruch 1, wobei jedes Wirkelement (41-44) zwei Wirkflächen (45) aufweist.

3. Reluktanzmaschine (10) nach Anspruch 1 oder Anspruch 2, wobei der Rotor (12) acht Wirkflächen (45) aufweist.

4. Reluktanzmaschine (10) nach einem der Ansprüche 1 bis 3, wobei die Wirkelemente (41-44) jeweils achsensymmetrisch bezüglich ihrer Symmetrieachse (70, 71) ausgebildet sind.

5. Reluktanzmaschine (10) nach einem der Ansprüche 1 bis 4, wobei die Wirkelemente (41-44) aus geblechtem Elektroblech hergestellt sind.

6. Reluktanzmaschine (10) nach einem der Ansprüche 1 bis 5, wobei zwei Wirkelemente (41, 43; 42, 44) am Umfang (40) des Rotors (12) um 180° versetzt zueinander angeordnet sind.

7. Reluktanzmaschine (10) nach einem der Ansprüche 1 bis 6, wobei mindestens eine der Wirkflächen (45) einen Bedeckungswinkel α=(n+1/2)*α n1 aufweist, mit n als ganze Zahl.

8. Reluktanzmaschine (10) nach einem der Ansprüche 1 bis 7, wobei die Reluktanzmaschine (10) eine Synchronreluktanz-Maschine ist, die vier Pole und 48 Nuten (21) aufweist.

9. Reluktanzmaschine (10) nach einem der Ansprüche 1 bis 8, wobei
- der Stator (11) eine Statorkontur in einer Umfangsrichtung der Reluktanzmaschine (10) aufweist;
- wobei der Rotor (12) eine Rotorkontur in der Umfangsrichtung der Reluktanzmaschine (10) aufweist;
- wobei zwischen dem Stator (11) und dem Rotor (12) ein Spalt angeordnet ist, der von der Statorkontur und der Rotorkontur begrenzt wird; und wobei
- die Rotorkontur als zweidimensionale Kontur einem Kreis entspricht, während die Statorkontur als zweidimensionale Kontur von einem Kreis abweicht, so dass der Spalt in der Umfangsrichtung der Reluktanzmaschine (10) in seiner Breite variiert und mindestens eine minimale Breite und mindestens eine maximale Breite aufweist.

## Claims

1. Reluctance machine (10) having
- a stator (11) ;
- a rotor (12);
- wherein the rotor (12) has a plurality of active elements (41-44), each having at least one active surface (45) with a coverage angle α, wherein the coverage angle α is measured in relation to the centre point (46) of the rotor (12), in that in a two-dimensional sectional view of the rotor a straight line (47, 48) is taken through one of the edge points of the active surface (45) in each case, wherein the two straight lines (47, 48) emanate from the centre point (46) and enclose the coverage angle α, wherein the active surfaces (45) each form a segment of the rotor (12) and face the stator (11), and wherein the active surfaces (45) effect a reduction of torque fluctuations of the reluctance machine (10),
- in that in each case two active elements offset by 180° form a pair (41, 43; 42, 44) and a first pair of active elements (41, 43) has a first axis of symmetry (70) and a second pair of active elements (42, 44) has a second axis of symmetry (71), wherein the position of the second axis of symmetry (71) results from the first axis of symmetry (70), in that the second axis of symmetry (71) is rotated by an angle β=90°-α_3n1 in respect of the first axis of symmetry (70) and wherein α_3n1=1/3*α_n1 applies for the angle α_3n1, where α_n1=360°/N1 and N1 = number of slots of the stator (11), and wherein each axis of symmetry (70, 71) runs through the centre point (46) of the reluctance machine (10).

2. Reluctance machine (10) according to claim 1, wherein each active element (41-44) has two active surfaces (45).

3. Reluctance machine (10) according to claim 1 or claim 2, wherein the rotor (12) has eight active surfaces (45).

4. Reluctance machine (10) according to one of claims 1 to 3, wherein the active elements (41-44) are formed axially symmetrically in each case in respect of their axis of symmetry (70, 71).

5. Reluctance machine (10) according to one of claims 1 to 4, wherein the active elements (41-44) are made of laminated magnetic steel sheet.

6. Reluctance machine (10) according to one of claims 1 to 5, wherein two active elements (41, 43; 42, 44) are arranged on the circumference (40) of the rotor (12) offset to one another by 180°.

7. Reluctance machine (10) according to one of claims 1 to 6, wherein at least one of the active surfaces (45) has a coverage angle α=(n+1/2)*α_n1, where n is an integer.

8. Reluctance machine (10) according to one of claims 1 to 7, wherein the reluctance machine (10) is a synchronous reluctance machine which has four poles and 48 slots (21).

9. Reluctance machine according to one of claims 1 to 8, wherein
- the stator (11) has a stator contour in a circumferential direction of the reluctance machine (10);
- wherein the rotor (12) has a rotor contour in the circumferential direction of the reluctance machine (10);
- wherein arranged between the stator (11) and the rotor (12) is a gap which is bounded by the stator contour and the rotor contour; and wherein
- the rotor contour as a two-dimensional contour corresponds to a circle, while the stator contour as a two-dimensional contour deviates from a circle, so that the gap varies in the circumferential direction of the reluctance machine (10) in its width and has at least a minimum width and at least a maximum width.

## Revendications

1. Machine (10) à reluctance comportant
- un stator (11);
- un rotor (12);
- le rotor (12) ayant une pluralité d'éléments (41 à 44) actifs ayant respectivement au moins une surface (45) active, ayant un angle α de recouvrement, l'angle α de recouvrement étant mesuré par rapport au centre (46) du rotor (12) en faisant passer, dans une vue en coupe en deux dimensions du rotor, une droite (47, 48) par l'un des points de bord de la surface (45) active, les deux droites (47, 48) partant du centre (46) et faisant un angle α de recouvrement, les surfaces (45) actives formant respectivement un segment du rotor (12) et étant tournées vers le stator (11) et les surfaces (45) actives provoquant une réduction de fluctuations du couple de la machine (10) à reluctance,
- par le fait que respectivement deux éléments actifs décalés de 180° forment une paire (41, 43 ; 42, 44) et une première paire d'éléments (41, 43) actifs a un premier axe (70) de symétrie et une deuxième paire d'éléments (42, 44) actifs a un deuxième axe (71) de symétrie, la position du deuxième axe (71) de symétrie provenant du premier axe (70) par le fait que le deuxième axe (71) de symétrie est tourné d'un angle β=90°-α_3n1 par rapport au premier axe (70) de symétrie et dans lequel, pour l'angle α_3n1 on a α_3n1=1/3*α_n1 avec α_n1=360°/N1 et N1 = nombre des encoches du stator (11) et
dans laquelle chaque axe (70, 71) de symétrie passe par le centre (46) de la machine (10) à reluctance.

2. Machine (10) à reluctance suivant la revendication 1, dans laquelle chaque élément (41 à 44) actif a deux surfaces (45) actives.

3. Machine (10) à reluctance suivant la revendication 1, dans laquelle le rotor (12) a huit surfaces (45) actives.

4. Machine (10) à reluctance suivant l'une des revendications 1 à 3, dans laquelle les éléments (41 à 44) actifs sont symétriques par rapport à un axe, rapportées à leur axe (70, 71) de symétrie.

5. Machine (10) à reluctance suivant l'une des revendications 1 à 4, dans laquelle les éléments (41 à 44) actifs sont fabriqués en tôle électrique feuilletée.

6. Machine (10) à reluctance suivant l'une des revendications 1 à 5, dans laquelle deux éléments (41, 43 ; 42, 44) actifs sont disposés sur le pourtour (40) du rotor (12) en étant décalés de 180° l'un par rapport à l'autre.

7. Machine (10) à reluctance suivant l'une des revendications 1 à 6, dans laquelle au moins l'une des surfaces (45) actives a un angle de recouvrement α = (n+1/2)*a_n1.

8. Machine (10) à reluctance suivant l'une des revendications 1 à 7, dans laquelle la machine (10) à reluctance est une machine à reluctance synchrone, qui a quatre pôles et 48 encoches (21).

9. Machine (10) à reluctance suivant l'une des revendications 1 à 7, dans laquelle
- le stator (11) a un contour dans une direction périphérique de la machine (10) à reluctance ;
- dans lequel le rotor (12) a un contour dans la direction périphérique de la machine (10) à reluctance ;
- dans laquelle il est disposé entre le stator (11) et le rotor (12) un intervalle, qui est délimité par le contour du stator et par le contour du rotor et dans laquelle
- le contour du rotor correspond en tant que contour à deux dimensions à un cercle, tandis que le contour du stator s'écarte en tant que contour à deux dimensions d'un cercle, de sorte que l'intervalle dans la direction périphérique de la machine (10) à reluctance varie dans sa largeur et a au moins une largeur minimum et au moins une largeur maximum.
